Europäisches Patentamt

(19) European Patent Office

Office européen des brevets

(11) Numéro de publication: **0 064 463**
A1

# (12) DEMANDE DE BREVET EUROPEEN

(21) Numéro de dépôt: 82400788.4

(22) Date de dépôt: 30.04.82

(51) Int. Cl.³: **F 16 F 9/00**
F 16 F 9/48, B 61 G 11/12
F 16 F 9/342

(30) Priorité: 30.04.81 FR 8108635

(43) Date de publication de la demande:
10.11.82 Bulletin 82/45

(84) Etats contractants désignés:
AT BE CH DE FR GB IT LI LU NL SE

(71) Demandeur: SOCIETE NOUVELLE DES ATELIERS DE VENISSIEUX
40 boulevard Henri Sellier
F-92150 Suresnes(FR)

(71) Demandeur: Etablissements FAUVET-GIREL
40 boulevard Henri Sellier
F-92150 Suresnes(FR)

(72) Inventeur: Dousset, Rémy
100 B cours Lafayette
F-69003 Lyon(FR)

(74) Mandataire: Dupuy, Louis
CREUSOT-LOIRE 15 rue Pasquier
F-75383 Paris Cedex 8(FR)

(54) Amortisseur hydraulique à aiguille.

(57) Amortisseur à aiguille muni d'une cavité primaire (7) et d'une cavité secondaire (12) les deux cavités communiquant par un ajutage (8) dans lequel coulisse une aiguille (9).
L'aiguille (9) est munie d'un filet hélicoïdal (10), ou analogue, permettant de donner un mouvement tourbillonnaire au fluide injecté dans la cavité secondaire au cours de l'opération d'amortissement.

Fig-1

1

"Amortisseur hydraulique à aiguille"

La présente invention se rapporte à un amortisseur hydraulique à aiguille, tel que par exemple un amortisseur selon le brevet français n° 2.398.226, muni d'une manière générale d'une cavité primaire remplie de fluide hydraulique et d'une cavité secondaire également remplie de fluide hydraulique et associée par ailleurs à un élément compressible, les deux cavités communiquant par un ajutage dans lequel coulisse une aiguille.

Dans le cas le plus courant où l'élément compressible est constitué par une vessie remplie de gaz, ladite vessie est soumise, à chaque opération d'amortissement, à un choc extrèmement violent de la part du fluide hydraulique, de sorte qu'il arrive que la paroi de celle-ci se déchire.

L'amortisseur de l'invention permet d'éviter ce genre d'accident, et est en outre de performances plus élevées par rapport à celle des amortisseurs connus jusqu'alors. Il est du type tel que muni d'une aiguille cylindrique destinée à coulisser, avec un jeu suffisant juste au coulissement, dans l'ajutage reliant les deux cavités, et il est caractérisé en ce que ladite aiguille est munie de moyens permettant de donner un mouvement tourbillonnaire au fluide injecté dans la cavité secondaire au cours de l'opération d'amortissement.

L'invention sera mieux comprise à l'aide de la description suivante de deux exemples non limitatifs de réalisation, en référence aux dessins annexés dans lesquels :

- la figure 1 est une vue schématique en coupe longitudinale d'un amortisseur conforme à l'invention

- la figure 2 est une vue en coupe d'une variante d'aiguille pouvant équiper l'amortisseur de la figure 1

- les figures 3 et 4 sont respectivement des vues en coupe selon les directions A et B de la figure 2

.../...

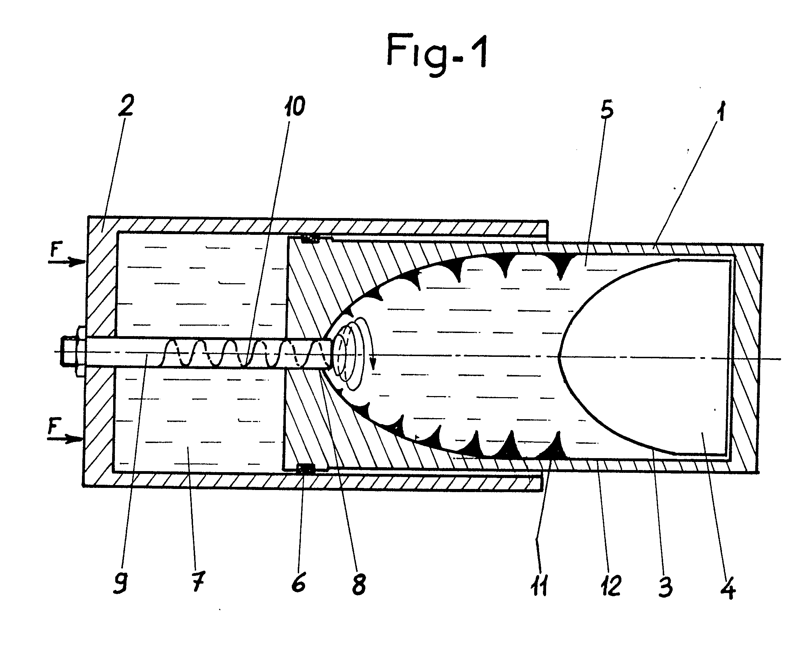

En se référant à la figure 1, l'amortisseur de l'invention comporte un corps 1 et une pièce d'appui 2 qui sont susceptibles de se déplacer relativement selon la direction de la charge F qui est appliquée.

Le corps 1 comporte une cavité intérieure 12, que l'on conviendra d'appeler "cavité secondaire". Dans cette cavité est formée une chambre 5 qui est remplie d'un liquide hydraulique. Le volume de cette chambre 5 est déterminé par un élément 3 qui peut se comprimer et se décomprimer.

Cet élément 3 est constitué, dans l'exemple considéré, par une poche élastique dont le volume intérieur 4 est rempli d'un gaz tel que de l'azote. Le corps 1 formant la cavité secondaire 12, dans laquelle une membrane élastique 3 sépare une chambre de liquide hydraulique et une chambre sous pression gazeuse, constitue un accumulateur oléopneumatique. Le corps 1 est par ailleurs construit de manière à pouvoir résister aux pressions élevées susceptibles d'être mises en oeuvre au cours de l'opération d'amortissement.

La pièce d'appui 2 est construite, comme représenté sur le dessin, de manière à pouvoir coulisser, de façon étanche grâce à un joint 6, autour du corps 1. Elle délimite avec le corps 1 une cavité de volume variable 7, que l'on conviendra d'appeler "cavité primaire", et qui est remplie du liquide hydraulique remplissant la chambre 5.

La cavité primaire 7 communique avec la cavité secondaire 12 par un conduit cylindrique 8 percé dans l'axe du corps 1. Une aiguille 9 de forme cylindrique est fixée, comme représenté, à la pièce d'appui 2, et a un diamètre inférieur à celui du canal 8 d'une quantité juste suffisante pour lui permettre de coulisser sans frottement dans ledit canal 8.

Conformément à l'invention, un filet hélicoïdal 10 est creusé le long de l'aiguille 9, la profondeur de ce filet croissant progressivement de l'amont vers l'aval de façon à permettre une croissance de la section de l'aiguille 9 de l'aval vers l'amont, ce qui est indispensable, comme on le sait, pour permettre le fonctionnement de tout amortisseur de ce type. Grâce à cette disposition, le liquide en provenance de la cavité primaire 7 débouche dans la cavité secondaire 12 selon un mouvement tourbillonnaire ou "vortex", comme représenté par la flè-

.../...

che sur le dessin. Le trajet effectué par ledit liquide dans ce jet tourbillonnaire est donc important, de sorte que l'on peut considérer que celui-ci est pratiquement totalement amorti par frottement liquide-liquide lorsqu'il atteint la poche élastique 3.

De façon à obtenir le maximum d'amortissement par frottement liquide-liquide dans la chambre 5, il est avantageux de donner, comme représenté sur le dessin, à la cavité secondaire 12, une forme allant en s'évasant de l'amont vers l'aval à partir du débouché de l'ajutage 8, par exemple une forme cylindro-cônique tel que représenté. Par ailleurs, il est avantageux de munir la paroi interne délimitant la chambre 5 d'aspérités 11, ou analogue, ce qui freinera le mouvement de mise en rotation de la masse de liquide remplissant à l'origine la chambre 5, une telle mise en rotation, correspondant à un embrayage du liquide d'origine sur le liquide incident, étant défavorable à l'effet de frottement"liquide primaire sur liquide secondaire" recherché dans un but d'amortissement.

Sur la figure on a représenté qu'un seul filet 10 creusé dans l'aiguille cylindrique 9. Il va de soi que, si l'on a besoin par exemple d'un débit plus grand, on peut creuser deux filets parallèles, ou plus. Il va de soi également que l'on peut creuser le ou les filets de profondeur constante mais de largeur variable allant en s'élargissant de l'amont vers l'aval, l'important étant toujours que la section restante de l'aiguille aille, de manière connue, en augmentant de l'aval vers l'amont.

Sur la figure, on a représenté le filet 10 comme uniforme c'est-à-dire par exemple"pas-à-droite" sur toute sa longueur. Si l'on veut absolument éviter la mise en rotation du liquide contenu initialement dans la chambre 2, on aura intérêt à creuser le ou les filets 10 de manière alternée tout le long de l'aiguille, c'est-à-dire par exemple "pas-à-droite" sur une première longueur, puis "pas-à-gauche" sur une seconde longueur, puis à nouveau"pas-à-droite",etc... Cette disposition présente en outre l'avantage d'entraîner un freinage de l'aiguille au retour de l'amortisseur à sa position initiale.

Enfin, dans le cas de l'application de l'invention à un amortisseur à cavité primaire munie d'une portion élastique déformable, tel qu'un amortisseur selon le brevet français 2.398.226 précité ou selon la demande de brevet français 80.24563, on ne creusera avantageusement le ou les filets 10 que jusqu'à une distance de l'extrémité aval de l'aiguille 9 suffisante pour lui laisser un embout cylindrique plein, ce qui est très avantageux pour ce type d'amortisseur, comme il est expliqué en détails dans ladite demande de brevet français 80.24563.

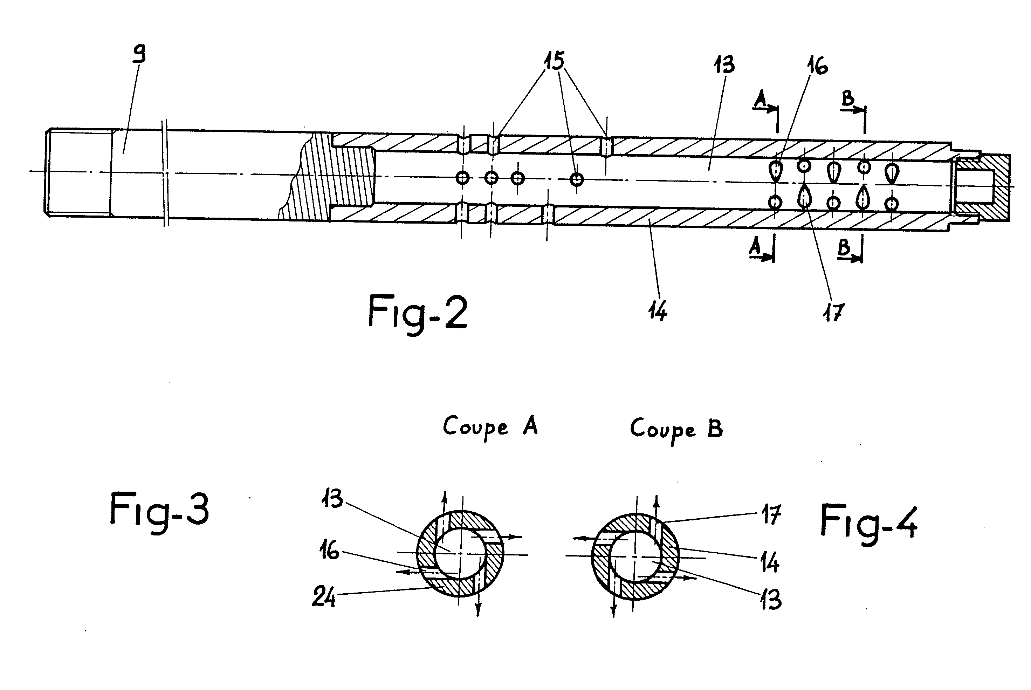

La réalisation qui vient d'être décrite utilise, pour créer le mouvement tourbillonnaire, ou "vortex", une aiguille à une ou plusieurs rainures hélicoïdales. Il va de soi que tout autre dispositif, classique ou non, permettant la création d'un jet tourbillonnaire peut également être utilisé, et l'on décrira maintenant, en référence aux figures 2 à 4, un exemple de réalisation d'aiguille destinée à remplacer l'aiguille 9 de la figure 1, ladite aiguille permettant de créer un vortex à l'aide de canaux tangentiels.

En se reportant à l'ensemble des figures 2 à 4, l'aiguille 9 représentée est creuse sur une grande partie de sa position aval, comme représenté, de manière à définir une cavité interne cylindrique 13. L'enveloppe tubulaire 14 de la cavité 13 est percée à sa partie amont de canaux radiaux (15) permettant à l'huile contenue dans la cavité primaire 7 de l'amortisseur (figure 1) de pénétrer dans la cavité 13.

A sa partie aval, le tube 14 est percé de plusieurs séries de canaux tangentiels (16,17, etc) percés quatre par quatre dans des plans successifs (A,B,etc), de manière à créer des jets tourbillonnaires de directions alternées, d'un plan au suivant, comme on le voit clairement à l'examen des figures.

5

## REVENDICATIONS

1. Amortisseur hydraulique à aiguille, du type comportant une cavité primaire(7) remplie de fluide hydraulique et une cavité secondaire(12) également remplie de fluide hydraulique et associée par ailleurs à un élément compressible(3), ledit amortisseur étant muni d'une aiguille cylindrique(9) destinée à coulisser, avec un jeu suffisant juste au coulissement, dans l'ajutage(8) reliant les deux cavités, caractérisé en ce que ladite aiguille(9) est munie de moyens (10,16,17) permettant de donner un mouvement tourbillonnaire au fluide injecté dans la cavité secondaire au cours de l'opération d'amortissement, lesdits moyens étant tels qu'ils créent des jets tourbillonnaires de directions alternées dans des plans de section successifs le long de l'aiguille.

2. Amortisseur selon la revendication 1, caractérisé en ce qu'il est muni d'une cavité secondaire(12) dont la section va en s'évasant de l'amont vers l'aval à partir du débouché dudit ajutage(8).

3. Amortisseur selon la revendication 2, caractérisé en ce que ladite section a une forme cylindro-cônique(figure 1).

4. Amortisseur selon l'une quelconque des revendications 1 à 3, caractérisé en ce que la paroi interne de la cavité secondaire est munie d'aspérités(11), ou analogue.

# Fig-1

Fig-2

Coupe A          Coupe B

Fig-3          Fig-4

II-2

0064463

# 0064463

Office européen
des brevets

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl. ³) |
|---|---|---|---|
| D,A | FR - A - 2 398 226 (ATELIERS DE VENISSIEUX) <br> --- | | F 16 F 9/ 00 <br> F 16 F 9/ 48 <br> B 01 G 11/ 12 <br> F 01 F 9/342 |
| A | FR - A - 2 448 663 (FREUDENBERG) <br> * en entier * <br> --- | 1-3 | |
| A | FR - A - 1 380 784 (R.I.V.) <br> * en entier * <br> --- | 1 | |
| A | DE - C - 876 047 (HEMSCHEIDT) <br> * en entier * <br> --- | 1 | DOMAINES TECHNIQUES RECHERCHES (Int. Cl. ³) |
| A | DE - B - 1 067 263 (GENEST) <br> * colonne 3, ligne 53 à colonne 4, ligne 46; figure 1 * <br> --- | 1 | B 60 G 15/00 <br> F 16 F <br> B 60 R 19/00 <br> B 60 K 5/12 <br> B 61 G 11/00 <br> B 61 G 9/00 |
| A | FR - A - 601 037 (DEN HAUT) <br> * en entier * <br> --- | 1 | |

./.

Le présent rapport de recherche a été établi pour toutes les revendications

| Lieu de la recherche | Date d'achèvement de la recherche | Examinateur |
|---|---|---|
| La Haye | 17.06.1982 | ESPEEL |

**0064463**

Numéro de la demande

Office européen
des brevets

**RAPPORT DE RECHERCHE EUROPEENNE**

EP 82 40 0788
- 2 -

| Categorie | Citation du document avec indication, en cas de besoin, des parties pertinentes | Revendica-tion concernée |
|---|---|---|
| | **DOCUMENTS CONSIDERES COMME PERTINENTS** | |
| A | FR - A - 1 477 893 (VEB ZENTRALE ENTWICKLUNG UND KONSTRUKTION ZEK HYDRAULIK) | |
| | * page 1, colonne de droite, paragraphes 5,6; figure 3 * | 2,3 |
| | --- | |
| A | FR - A - 2 438 769 (GOULD) | |
| | * figure 1 * | 4 |
| | --- | |
| A | DE - B - 1 086 731 (ANF) | |
| A | DE - C - 697 799 (KREKEL) | |
| A | FR - A - 2 084 173 (TEVES) | |
| | ------- | |

CLASSEMENT DE LA DEMANDE (Int. Cl.³)

DOMAINES TECHNIQUES RECHERCHES (Int. Cl.³)

OEB Form 1503.2  06.78